Europäisches Patentamt

European Patent Office

Office européen des brevets

(11) Veröffentlichungsnummer: **0 275 098**
A2

(12) **EUROPÄISCHE PATENTANMELDUNG**

(21) Anmeldenummer: 88100435.2

(22) Anmeldetag: 14.01.88

(51) Int. Cl.⁴: **B 27 F 4/00**
B 27 G 11/00

(30) Priorität: 21.05.87 DE 3717129
15.01.87 DE 8700668
14.03.87 DE 8703866

(43) Veröffentlichungstag der Anmeldung:
20.07.88 Patentblatt 88/29

(84) Benannte Vertragsstaaten:
AT BE CH DE ES FR IT LI NL

(71) Anmelder: **Stegherr, Ludolf**
**Donaustaufer Strasse 30**
**D-8400 Regensburg (DE)**

(72) Erfinder: **Stegherr, Ludolf**
**Donaustaufer Strasse 30**
**D-8400 Regensburg (DE)**

(74) Vertreter: **Wasmeier, Alfons, Dipl.-Ing. et al**
**Postfach 382 Greflingerstrasse 7**
**D-8400 Regensburg (DE)**

(54) **Mehrfachbohr- und -dübelaggregat sowie Verfahren und Vorrichtung zum Bereitstellen von Dübeln oder dergl. zylindrischen Verbindungselementen.**

(57) Zum selbsttätigen Erstellen von Bohrungen in Sprossen und Rahmenteilen von Sprossenfenstern, zum Einbringen von Leim in die Bohrungen und zum Einsetzen von Dübeln werden Einheiten vorgeschlagen, die aus jewells drei Dübeleinführvorrichtungen und drei zugeordneten Leimeinspritzvorrichtungen bestehen, welche individuell und gleichzeitig betätigbar sind und welche jeweils entsprechend den Bohrlöchern in einer Sprossenstirnseite angeordnet sind.

Zum Bereitstellen von Dübeln im Magazinen und zum gesteuerten Einsetzen dieser Dübel in Bohrungen werden Wechselmagazine verwendet, deren Magazinboden über einem Dübelaufnahmekopf angeordnet und die Dübelabgabestelle den Aufnahmestellen des Dübelaufnahmekopfes zugeordnet ist; in dieser Position werden Dübel in die Aussparungen des Dübelaufnahmekopfes übergeführt und in die Abgabeposition gebracht; die Dübel in der Abgabeposition werden aus dem Dübelaufnahmekopf in deckungsgleiche Bohrungen eines Bauteiles über Dübelausstoßvorrichtungen eingebracht.

Fig. 2

## Beschreibung

### Mehrfachbohr- und -dübelaggregat sowie Verfahren und Vorrichtung zum Bereitstellen von Dübeln oder dergl. zylindrischen Verbindungselementen

Die Erfindung bezieht sich auf das Bohren und das Setzen von Dübeln in Bohrungen von Sprossenfensterteilen sowie auf ein Verfahren und eine Vorrichtung zum Bereitstellen von Dübeln oder ähnlichen bolzenförmigen Elementen aus Holz, Metall, Kunststoff oder dergl. Material in Magazinen, auf das Einsetzen der Dübel oder dergl. in Bohrungen zum Verbinden von Bauteilen, z.B. Fensterrahmen miteinander sowie auf das Einfüllen von Dübeln oder dergl. in Magazine.

Bei Sprossenfenstern werden die Sprossen mit den Rahmenteilen mit Hilfe von Dübeln verbunden. Dies geschieht bisher in der Weise, daß Bohrungen in die Sprossen und in die zugeordneten Stellen der Rahmenteile gebohrt, die Bohrungen innen mit einem Leimauftrag versehen sowie die Dübel einzeln von Hand in die Bohrungen eingesetzt und darin verklebt werden. Der Arbeits-und der Zeitaufwand hierfür ist hoch und es ist auf diese Weise nicht möglich, den Dübelvorgang in die automatische Herstellung von Sprossenfenstern einzubeziehen.

Es ist bekannt, bei der Möbelherstellung in Verbindungsteilen automatisch Dübelbohrungen zu erstellen, in die Bohrlöcher Leim einzuspritzen und Dübel einzutreiben; die Verbindungsteile werden hierbei mit Platten oder dergl. verbunden, wobei eine Einheit eines Dübelaggregates aus einem einzigen Bohrer, einer einzigen Leimeinspritzvorrichtung und einer zugeordneten einzigen Dübelsetzvorrichtung besteht. Werden mehrere Dübel nebeneinander benötigt, werden einzelne Aggregate aneinandergereiht, wobei der Mindestabstand zweier benachbarter Aggregate durch die baulichen Abmessungen der Einzelaggregate festgelegt ist, so daß ein vorgegebener Mindestabstand nicht unterschritten werden kann. Für die Sprossen von Sprossenfenstern mit etwa T-förmigen Querschnitt, bei denen die Dübel einen geringen Abstand voneinander haben, können Einzelaggregate nicht nebeneinander gesetzt werden, da der kleinste Abstand der Bohrungen der beiden Einzelaggregate wesentlich größer ist als der Abstand zweier Dübelbohrungen innerhalb einer Sprosse.

Des weiteren ist es bekannt, bei der Herstellung von Sprossenfenstern eine einzige Bohrung pro Stirnseite der Sprosse zu bohren und den entsprechenden Dübel maschinell zu setzen. Eine derartige Methode läßt sich jedoch auf das Bohren, Leimen und Dübeln mehrerer Dübel gleichzeitig nicht übertragen.

Es ist bereits vorgeschlagen worden, in Verbindung mit einem automatischen Bohrvorgang bei Mehrfachdübelbohrungen in den Sprossen und den zugehörigen Rahmenteilen von Sprossenfenstern mehrere Bohrungen einer Verbindungsstelle gleichzeitig zu bohren, Leim in alle Bohrungen einer Verbindungsstelle automatisch und gleichzeitig einzuführen und unmittelbar anschließend alle für diese Verbindungsteile vorgesehenen Dübel gleichzeitig und selbsttätig in die Sprossenbohrungen einzusetzen. Hierzu wird eine Einheit aus mindestens zwei Dübeleinführvorrichtungen und mindestens zwei Leimeinspritzvorrichtungen verwendet, wobei jeweils eine Leimeinspritzvorrichtung einer Dübeleinführvorrichtung zugeordnet ist, und es werden alle Dübeleinführvorrichtungen für sich und alle Leimeinspritzvorrichtungen für sich gleichzeitig betätigt. Damit wird erreicht, daß die Mehrfachdübelbohrungen in Sprossen bzw. in einem anderen Arbeitsgang die Mehrfachdübelbohrungen in den zugehörigen Rahmenteilen auf einmal gebohrt werden, daß die Sprossen- bzw. Rahmenteile anschließend um den Abstand zwischen Bohraggregat und Dübelaggregat selbsttätig verschoben werden, daß am Dübelaggregat mit Hilfe der Leimeinspritzvorrichtungen die Bohrungen gleichzeitig und selbsttätig mit einem Leimauftrag versehen werden und daß alle Dübel zur Verwendung einer Stirnseite einer Sprosse mit einem Rahmenteil auf einmal und gleichzeitig in die vorbereiteten Bohrungen der Sprosse bzw. des Rahmenteiles eingesetzt werden. Da das Beleimen und Setzen der Dübel selbsttätig und mit hoher Geschwindigkeit vorgenommen wird, läßt sich eine besonders hohe Herstellgeschwindigkeit erzielen. Diese Vorgänge können auch in eine vollautomatische Anlage zum Längen und Profilieren der Sprossen, zum Bohren der Bohrlöcher und zum Setzen der Dübel im Durchlaufverfahren integriert werden. Des weiteren lassen sich ausreichend kleine Dübelabstände erreichen, damit in der Stirnseite einer Sprosse drei Dübel gesetzt werden können, die symmetrisch zur Hauptdübelebene und voneinander versetzt sind.

Die Dübel werden hierbei über Schlauchleitungen von einer Vorratsstelle in das Dübelaggregat, vorzugsweise über einen Vibratorantrieb, eingeführt, wobei jede Dübelstelle mit einer getrennten Schlauchleitung verbunden ist. Dies ergibt eine komplizierte, aufwendige und relativ störanfällige Form der Dübelzuführung. Des weiteren ist es nicht möglich, in ein und derselben Vorrichtung Dübel unterschiedlichen Durchmessers und unterschiedlicher Länge zu verarbeiten.

Aufgabe der Erfindung ist es, in Verbindung mit einem automatischen Bohrvorgang bei Mehrfachdübelbohrungen in den Sprossen und den zugehörigen Rahmenteilen von Sprossenfenstern mehrere Bohrungen einer Verbindungsstelle gleichzeitig zu bohren, Leim in alle Bohrungen einer Verbindungsstelle automatisch und gleichzeitig einzuführen und unmittelbar anschließend alle für diese Verbindungsstelle vorgesehenen Dübel gleichzeitig und selbsttätig in die Sprossenbohrungen einzusetzen.

Des weiteren ist es Aufgabe der Erfindung, Dübel oder ähnliche zylinderförmige Verbindungselemente bereitzustellen und in miteinander zu verbindenden Rahmenteilen einzusetzen bzw. allgemein zylinderförmige Verbindungselemente so zu positionieren, daß sie in exakter Lage in Gegenstände bzw. Bauteile eingesetzt werden können, die bereitzustellenden Dübel oder dergl. in Magazinen zwischenzuspeichern und diese Magazine mit Dübeln oder dergl. zu füllen.

Dies wird gemäß der Erfindung mit den Merkmalen des Kennzeichens des Anspruches 1 und/oder des Anspruches 7 und/oder des Anspruches 10 erreicht. Weitere Ausgestaltungen der Erfindung sind Gegenstand der Unteransprüche.

Es wird mit der Erfindung vorgeschlagen, in Verbindung mit einem automatischen Bohrvorgang bei Mehrfachdübelbohrungen in den Sprossen und den zugehörigen Rahmenteilen von Sprossenfenstern mehrere Bohrungen einer Verbindungsstelle gleichzeitig zu bohren, Leim in alle Bohrungen einer Verbindungsstelle automatisch und gleichzeitig einzuführen und unmittelbar anschließend alle für diese Verbindungsteile vorgesehenen Dübel gleichzeitig und selbsttätig in die Sprossenbohrungen einzusetzen. Hierzu wird eine Einheit aus mindestens zwei Dübeleinführvorrichtungen und mindestens zwei Leimeinspritzvorrichtungen verwendet, wobei jeweils eine Leimeinspritzvorrichtung einer Dübeleinführvorrichtung zugeordnet ist, und es werden alle Dübeleinführvorrichtungen für sich und alle Leimeinspritzvorrichtungen für sich gleichzeitig betätigt. Damit wird erreicht, daß die Mehrfachdübelbohrungen in Sprossen bzw. in einem anderen Arbeitsgang die Mehrfachdübelbohrungen in den zugehörigen Rahmenteilen auf einmal gebohrt werden, daß die Sprossen-bzw. Rahmenteile anschließend um den Abstand zwischen Bohraggregat und Dübelaggregat selbsttätig verschoben werden, daß am Dübelaggregat mit Hilfe der Leimeinspritzvorrichtungen die Bohrungen gleichzeitig und selbsttätig mit einem Leimauftrag versehen werden und daß alle Dübel zur Verwendung einer Sirnseite einer Sprosse mit einem Rahmenteil auf einmal und gleichzeitig in die vorbereiteten Bohrungen der Sprosse bzw. des Rahmenteiles eingesetzt werden. Da das Beleimen und Setzen der Dübel selbsttätig und mit hoher Geschwindigkeit vorgenommen wird, läßt sich eine besonders hohe Herstellgeschwindigkeit erzielen. Diese Vorgänge können auch in eine vollautomatische Anlage zum Längen und Profilieren der Sprossen, zum Bohren der Bohrlöcher und zum Setzen der Dübel im Durchlaufverfahren integriert werden. Des weiteren lassen sich ausreichend kleine Dübelstände erreichen, damit in der Stirnseite einer Sprosse drei Dübel gesetzt werden können, die symmetrisch zur Hauptdübelebene und voneinander versetzt sind.

Die Dübel werden hierbei über Schlauchleitungen von einer Vorratsstelle in das Dübelaggregat, vorzugsweise über einen Vibrationsantrieb, eingeführt, wobei jede Dübelstelle mit einer getrennten Schlauchleitung verbunden ist. Dies ergibt eine komplizierte, aufwendige und relativ störanfällige Form der Dübelzuführung. Des weiteren ist es nicht möglich, in ein und derselben Vorrichtung Dübel unterschiedlichen Durchmessers und unterschiedlicher Länge zu verarbeiten.

Mit einer derartigen Vorrichtung wird erreicht, daß die Mehrfachdübelbohrungen in Sprossen bzw.in einem anderen Arbeitsgang die Mehrfachdübelbohrungen in den zugehörigen Rahmenteilen auf einmal gebohrt werden, daß die Sprossen bzw. Rahmenteile anschließend um den Abstand zwischen Bohraggregat und Dübelaggregat selbsttätig verschoben werden, daß am Dübelaggregat mit Hilfe von Leimeinspritzvorrichtungen die Bohrungen gleichzeitig und selbsttätig mit einem Leimauftrag versehen werden, und daß alle Dübel zur Verbindung einer Stirnseite einer Sprosse mit einem Rahmenteil, vorzugsweise drei Dübel, auf einmal und gleichzeitig in die vorbereiteten Bohrungen der Sprosse bzw. des Rahmenteiles eingesetzt werden. Der Leim wird dabei seitlich zur Längsachse der Vorrichtung unmittelbar vor dem Setzen der Dübel in die jeweiligen Bohrlöcher eingespritzt. Bei der Bewegung der Werkstücke zwischen Bohreraggregat und Dübelaggregat passieren die Werkstücke wahlweise eine Ausblasvorrichtung, die den durch das Bohren in den Bohrlöchern entstandenen Staub aus den Bohrlöchern blasen, ehe die Werkstücke an das Dübelaggregat gelangen.

Hierdurch ergibt sich eine wesentlich höhere Herstellgeschwindigkeit als bei bisher bekannten Vorrichtungen, bei denen die Dübel von Hand gesetzt werden, da das Beleimen und Setzen der Dübel sowohl vollautomatisch und mit hoher Geschwindigkeit vorgenommen werden kann als auch in eine vollautomatische Anlagen zum Längen und Profilieren der Sprossen, zum Bohren der Bohrlöcher und zum Setzen der Dübel im Durchlaufverfahren integriert werden kann. Des weiteren ist es erst mit einer derartigen Vorrichtung nach der Erfindung möglich, ausreichend kleine Dübelabstände zu erreichen, daß in der Stirnseite einer Sprosse drei Dübel gesetzt werden können, die symmetrisch zur Hauptdübelebene und voneinander versetzt sind.

Die Dübel werden z.B. über Schlauchleitungen (aus Kunststoff oder dergl. Material) von einer Vorratsstelle in das Dübelaggregat eingeführt; der Antrieb für die Zuführung kann ein Vibratorantrieb sein. Damit die Dübel gleichzeitig an allen Dübelbohrungen einer Verbindungsstelle bereitgestellt werden können, ist jede Dübelstelle mit einer getrennten Schlauchleitung verbunden. Die Dübel werden am Auslaß einer jeden Schlauchleitung einzeln und gleichzeitig in eine Bereitschaftsstellung angehoben und in dieser Stellung festgehalten, in der sie in axialer Richtung einerseits mit einer Antriebsstange und andererseits mit der jeweiligen zugehörigen Bohrung der Sprosse ausgerichtet sind. Durch Betätigung der Dübelantriebsstangen werden alle Dübel einer Verbindungsstelle gleichzeitig in die jeweilige Bohrung in axialer Richtung eingeführt; der Antrieb ist z.B. ein Pneumatik-, ein Hydraulik-, ein mechanischer Antrieb (mit Federbetätigung) oder ein elektromagnetischer Antrieb, der alle Antriebsstangen gemeinsam beaufschlagt. Der Antrieb für die Dübelantriebsstangen und die Betätigung für die Leimeinspritzung sind so gekoppelt, daß sichergestellt ist, daß die Zeitdifferenz zwischen Leimeinspritzung und Dübeleinführung möglichst gering ist und keine Überlappung dieser beiden Vorgänge auftritt.

Die exakte Positionierung der Werkstücke für den Bohrvorgang und den Leim-, sowie Dübelvorgang erfolgt über Einstellanschläge, die an einem Schiebetisch befestigt sind, der an der Vorrichtung verschiebbar geführt ist. Die Anschläge sind einstellbar und mit Niederhaltern gekoppelt, die das Werkstück an den Anschlägen für das Bohren und Dübeln festlegen.

Da die Werkstücke einerseits Sprossen sind, die an den Stirnseiten gebohrt und gedübelt werden, andererseits Rahmenteile, deren Bohrungen quer zur Längsachse dieser Rahmenteile verlaufen, sind Längs- und Queranschläge erforderlich, um eine einfache Umrüstung zu erreichen.

Wenn die Maschine mit dem Mehrfachbohr- und -dübelaggregat nach der Erfindung nur zum Bohren vom Werkstücken verwendet werden soll, wird das Dübelaggregat abgeschaltet und mit dem Maschinengestell wird eine Längsanschlagschiene befestigt, die das zu bohrende Werkstück aufnimmt. Die Längsanschlagschiene ist mit stufenlos verstellbaren Anschlägen versehen, die mechanisch oder auch digital arbeiten. Zu diesem Zweck ist die Längsanschlagschiene vorzugsweise als Profilschiene ausgebildet, in deren Längsführungen die Anschläge längenverschiebbar und festlegbar geführt sind.

Dübel, wie sie beispielsweise für Rahmenteile von Holzfenstern verwendet werden, oder entsprechende zylinderförmige oder bolzenförmige Teile aus Kunststoff oder Metall sind in einem Dübelmagazin gespeichert, dessen Dimensionen entsprechend dem Durchmesser und der Länge der Dübel ausgebildet sind, d.h. für bestimmte Dübellängen und/ oder bestimmte Dübeldurchmesser werden getrennte Magazine verwendet. Diese Magazine weisen insbesondere eine Bodenwand auf, die im betriebsbereiten Zustand des Magazins entfernt, z.B. abgezogen wird, so daß die Dübel nach unten aufgrund ihres Gewichtes bzw. des Gewichtes der Summe der darüberliegenden Dübel aus dem Magazin abgegeben werden. Der Boden kann jedoch auch feststehend mit entsprechenden spaltförmigen Auslässen für die Dübelabgabe, z.B. trichterförmig mit einem Auslaß oder mit mehreren Auslässen ausgebildet sein. Das Magazin ist austauschbar ausgebildet, insbesondere ist das Magazingehäuse am Maschinenrahmen lösbar befestigt, z.B. verschraubt, so daß es gegen ein anderes Magazin ausgewechselt werden kann, z.B. ein leeres gegen in gefülltes Magazin oder ein Magazin bestimmter Dübeltype gegen ein solches anderer Dübeltype.

Unterhalb des Magazins ist ein Dübel-Aufnahmekopf bzw. Dübeleinsatz angeordnet, der Dübel aus dem Magazin aufnimmt und sie im Dübelaufnahmekopf so positioniert, daß sie genau der Position der Bohrlöcher des erforderlichen Bohrbildes zugeordnet sind, die zur Aufnahme der Dübel in die miteinander zu verbindenden Bauteile gebohrt sind. Diese Position ist auch deckungsgleich mit den Ausstoßstangen der Dübelausstoßvorrichtung, die die Dübel aus dem Dübelaufnahmekopf in die zugeordneten Bohrlöcher drücken.

Der Dübel-Aufnahmekopf ist ebenso wie das Magazin und die Dübel-Ausstoßvorrichtung auswechselbar, damit eine Anpassung an unterschiedliche Dübeltypen (mit unterschiedlichem Durchmesser und unterschiedlicher Länge) möglich ist. Vorzugsweise ist der Dübel-Aufnahmekopf als Steckteil ausgebildet und in Schienen bzw. Führungen, etwa schwalbenschwanzförmiger Art, in einem Schieber angeordnet, der unterhalb des Magazins zusammen mit dem Dübel-Aufnahmekopf quer zur Längsachse der Dübel verschiebbar ist. Der Schieber ist vorzugsweise eine Schiene oder Leiste, die in die Dübelübergabestelle und von ihr weg, z.B. im Takt des Dübelsetzens verschoben wird. Durch diese Bewegung wird die einwandfreie Übergabe der Dübel vom Magazin in den Dübel-Aufnahmekopf sichergestellt, und der Schieber kann auf unterschiedliche Positionen von Bohrbildern bzw. Bohrungen eingestellt werden. Der Schieber führt eine hin- und hergehende Bewegung aus, die durch einen an sich bekannten Antrieb mit gesteuertem Hub erzeugt wird. Diese Hin- und Herbewegung hat den Zweck, den Dübel-Aufnahmekopf relativ zum Dübelmagazin zu verschieben, damit die einzelnen Dübel einwandfrei in die Schlitze des Dübel-Aufnahmekopfes nach unten in die Übergabeposition rollen können und damit verhindert wird, daß zwei nebeneinanderliegende Dübel sich gegenseitig sperren und keiner von beiden in den entsprechenden Schlitz des Dübel-Aufnahmekopfes gelangt. Die Dübel-Ausstoßvorrichtung ist am Maschinengestell befestigt. Die Ausstoßstangen, die in ihrer Anzahl und in ihrer Position den Dübel-Ausstoßpositionen des Dübel-Aufnahmekopfes und damit dem Bohrbild entsprechen, werden in Richtung der Längsachse der Dübel gleichzeitig betätigt, so daß die dem Bohrbild entsprechende Anzahl von Dübel des hierfür vorgesehenen Dübel-Aufnahmekopfes gleichzeitig in das am Schieber anliegende Werkstück, d.h. in die deckungsgleichen Bohrungen des Werkstückes eingedrückt werden. Die Dübel-Ausstoßstangen sind über eine Schnellkupplung mit dem Antrieb verbunden.

Zum automatischen Füllen der Magazine mit Dübeln oder dergl. zylinderförmigen Verbindungselementen wird in weiterer Ausgestaltung der Erfindung eine Füllvorrichtung vorgeschlagen, bei der das Füllen des Magazins von unten erfolgt, was einen einwandfreien und konstanten Füllvorgang ermöglicht, bei dem die Längsachse aller Dübel parallel verläuft. Zum Füllen wird die Bodenwand des Magazins entfernt und das Magazin mit dem offenen Boden auf einen Arbeitsplatte aufgesetzt, die einen Füllschlitz aufweist, dessen Breite und Länge etwas größer ist als Durchmesser und Länge der einzuführenden Dübel. Die in das Magazin einzuführenden Dübel werden über einen Dübelförderer zugeführt und in eine Postion gebracht, in der sie unterhalb des Schlitzes auf diesen Schlitz ausgerichtet sind. Die Dübel liegen in dieser Position auf einem Aufnahmekopf auf, der den Dübel zentriert und der mit einem Stößel verbunden ist, der z.B. mechanisch, hydraulisch oder pneumatisch im Takt angetrieben wird und der den Dübel etwa bis zur Schlitzmitte hochhebt. Bei diesem Hubvorgang drückt der Dübel zwei unter Spannung gegeneinander vorgespannte Arme soweit auseinander, daß er zwischen diesen beiden Armen hindurch in den Schlitz eintreten kann. Sobald der Dübel sich aus dem Wirkungsbereich der beiden vorgespannten Arme herausbewegt hat, nähern sich die Enden der Arme einander, so daß der eben hochgehobene Dübel sich nicht mehr nach abwärts bewegen kann und im Schlitz angeordnet ist. Beim Hochheben des nächsten Dübels wird der vorausgehende Dübel in das Dübelmagazin hineinbewegt, und der soeben zugeführte Dübel nimmt die Position des vorausgehenden Dübels ein. Durch laufendes weiteres Zuführen von Dübeln werden dabei die bereits im Magazin befindlichen Dübel innerhalb des Magazines verteilt, wobei stets die Lage der Dübel mit paralleler Achse aufrecht erhalten bleibt.

Die Dübelzuführ-Fördervorrichtung ist in einer Ausführungsform der Erfindung als Drehteller ausgebildet, der zur Mitte hin vorzugsweise kegelförmig erhöht ist und der in Umfangsrichtung eine Begrenzungswand besitzt, an der die in den Drehteller eingefüllten Dübel sich in Umfangsrichtung hintereinander bei rotierendem Drehteller in einer oder mehreren Reihen ausrichten. An einer Stelle der Begrenzungswand ist eine Öffnung vorgesehen, die den Anfang einer tangential verlaufenden Führungsrinne darstellt. Die Führungsrinne ist durch ein verstellbares Leitblech begrenzt, das auf Dübel unterschiedlichen Durchmessers einstellbar ist. Durch diese Öffnung und entlang der Führungsrinne wird die Reihe von Dübeln aus dem Drehteller abgeführt und an die Übergabestelle unterhalb des Magazins herangeführt. Das Zuführen der Dübel kann jedoch auch in beliebiger anderer Weise geschehen, wenn sichergestellt ist, daß die Dübel einzeln nacheinander aneinander anstoßend an der Übergabestelle bereitgestellt werden, damit sie einzeln im Takt von unten in das Magazin eingeschoben werden, wie dies vorstehend erläutert ist. Zur exakten Positionierung eines jeden Dübels in der Hubposition ist ein fester Dübelanschlag vorgesehen, mit dem die Stirnfläche des einlaufenden Dübels genau in der Hubposition in Eingriff kommmst. Des weiteren ist zur Vermeidung von Leerhüben bei fehlendem Dübel in der Hubposition eine Abtast- oder Abfühlvorrichtung, zB. eine Lichtschranke, vorgesehen, die ein Signal gibt, wenn der Dübel die Hubposiion erreicht hat. Dieses Signal steuert die Arbeitsweise der Dübelhubvorrichtung und damit den Takt des Füllens des Magazins.

Nachstehend wird die Erfindung in Verbindung mit der Zeichnung anhand von Ausführungsbeispielen erläutert. Es zeigt:

    Fig. 1 eine Stirnansicht einer Sprosse mit drei Dübelbohrungen,

    Fig. 2 eine Seitenansicht der Sprosse nach Fig. 1,

    Fig. 3 die Vorrichtung mit Bohr- und Dübelaggregat in schematischer Darstellung in einer Ansicht von vorne,

    Fig. 4 schematisch die Ausbildung eines Bohrers,

    Fig. 5 eine schematische Darstellung eines Dübelaggregates von vorne,

    Fig. 6 eine schematische Darstellung eines Dübelaggregates in Aufsicht,

    Fig. 7 eine Seitenansicht eines Dübelaggregates mit Dübelzuführung,

    Fig. 8 eine Detail-Seitenansicht des Dübelaggregates,

    Fig. 9 einen Schnitt durch das Dübelaggregat nach Fig. 8 längs der Linie A-B,

    Fig. 10 eine Aufsicht auf die Längs- und Queranschläge mit Niederhaltern,

    Fig. 11 eine Aufsicht auf eine Längsanschlagschiene nach der Neuerung in Verbindung mit dem Bohr- und Dübelaggregat,

    Fig. 12 eine Aufsicht auf die Längsanschlagschiene nach Fig. 11,

    Fig. 13 einen Schnitt durch die Längsanschlagschiene nach Fig. 11, 12,

    Fig. 14 eine Seitenansicht der Dübel-Bereitstellvorrichtung, teilweise im Schnitt,

    Fig. 15 eine Aufsicht auf die Darstellung nach Fig. 14,

    Fig. 16 eine Aufsicht auf die Dübel-Ausstoßvorrichtung,

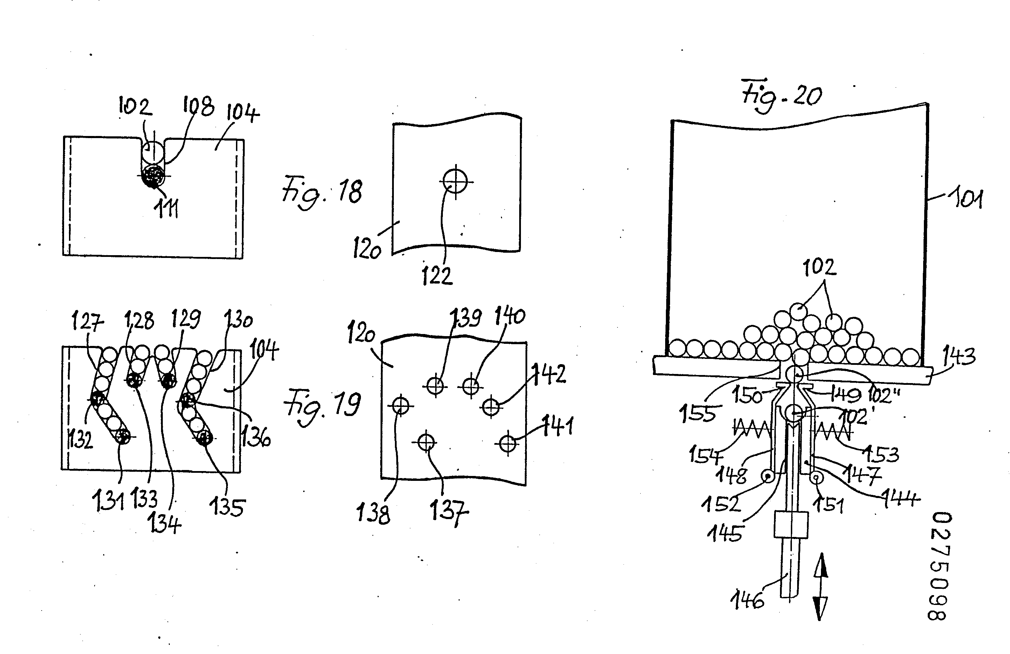

    Fig. 17 eine Stirnansicht der Dübel-Ausstoßvorrichtung,

    Fig. 18 eine Seitenansicht einer Ausführungsform eines Dübelaufnahmekopfes und eines zugeordneten Bohrbildes,

    Fig. 19 eine Seitenansicht einer zweiten Ausführungsform eines Dübel-Aufnahmekopfes mit zugeordnetem Bohrbild,

    Fig. 20 eine Seitenansicht einer Dübel-Füllvorrichtung mit Dübelmagazin, teilweise im Schnitt,

    Fig. 21 eine Schrägansicht einer Ausführungsform einer Dübehubvorrichtung, und

    Fig. 22 eine schematische Aufsicht auf eine Ausführungsform einer Dübelzuführ-Fördervorrichtung für das Füllen von Magazinen.

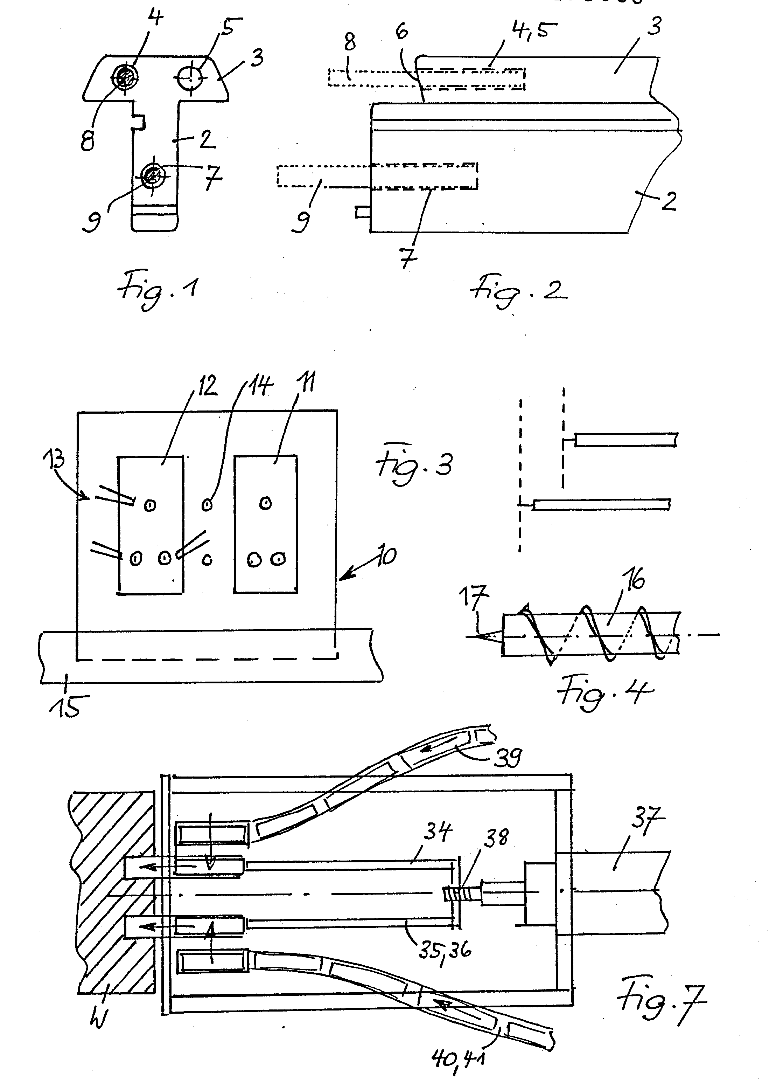

Eine Sprosse 1 hat z.B. das in den Figuren 1 und 2 dargestellte T-Profil mit einem vertikalen Schaft 2 und einem horizontalen Balken 3. Der Balken 3 mit zwei nebeneinander und symmetrisch zur vertikalen Längsachse angeordneten Bohrungen 4, 5 ist gegenüber dem Schaft 2 zurückgesetzt, und die Stirnfläche 6 des Balkens 3 ist nach unten und innen gegen den Schaft abgeschrägt. Diesem Profil der Frontseite entspricht das Gegenprofil der Rahmenleiste, mit der die Sprosse verbunden wird. Der Schaft 2 besitzt eine Bohrung 7 in der Längsachse. Die Bohrungen 4, 5, 6 nehmen jeweils einen Dübel 8, 8, 9 auf, der in der jeweiligen Bohrung verleimt wird.

Die Bohr- und Dübelvorrichtung 10 nimmt das Bohraggregat 11, das Dübelaggregat 12 und die Leimauftragvorrichtung 13, die mit dem Dübelaggregat 12 gekoppelt ist, auf und weist vorzugsweise zwischen Bohraggregat und Dübelaggregat eine Blasvorrichtung 14 auf, die die Bohrungen von Staub befreit, wenn das Werkstück von dem Bohraggregat zum Dübelaggregat bewegt wird. Diese Verschiebung des Werkstückes erfolgt auf einem schematisch angedeuteten Schiebetisch 15. Entsprechend der Stirnseite der Sprosse mit versetztem Oberteil haben sowohl die Bohrer des Bohreraggregates als auch die Dübeleintreibelemente des Dübelaggregates unterschiedliche Länge. Die Bohrer 16 sind in spezieller Weise so ausgebildet, daß sie eine extrem lange Zentrierspitze 17 haben. Damit wird erreicht, daß die Bohrer bei gekonterten Schrägen sowohl in der Sprosse als im Rahmenteil nicht verlaufen, d.h.

nicht abgedrängt werden, so daß auf diese Weise eine einwandfreie und saubere Bohrung erreicht wird, die Voraussetzung dafür ist, daß ein automastisches Verdübeln erreicht werden kann.

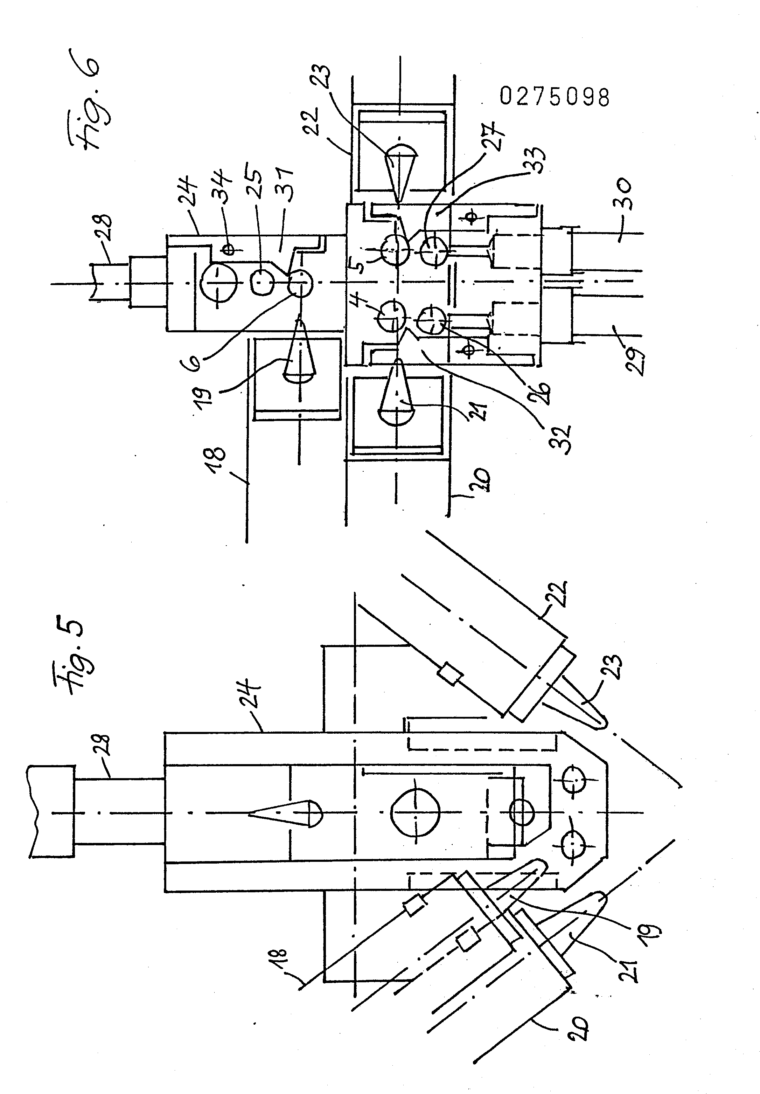

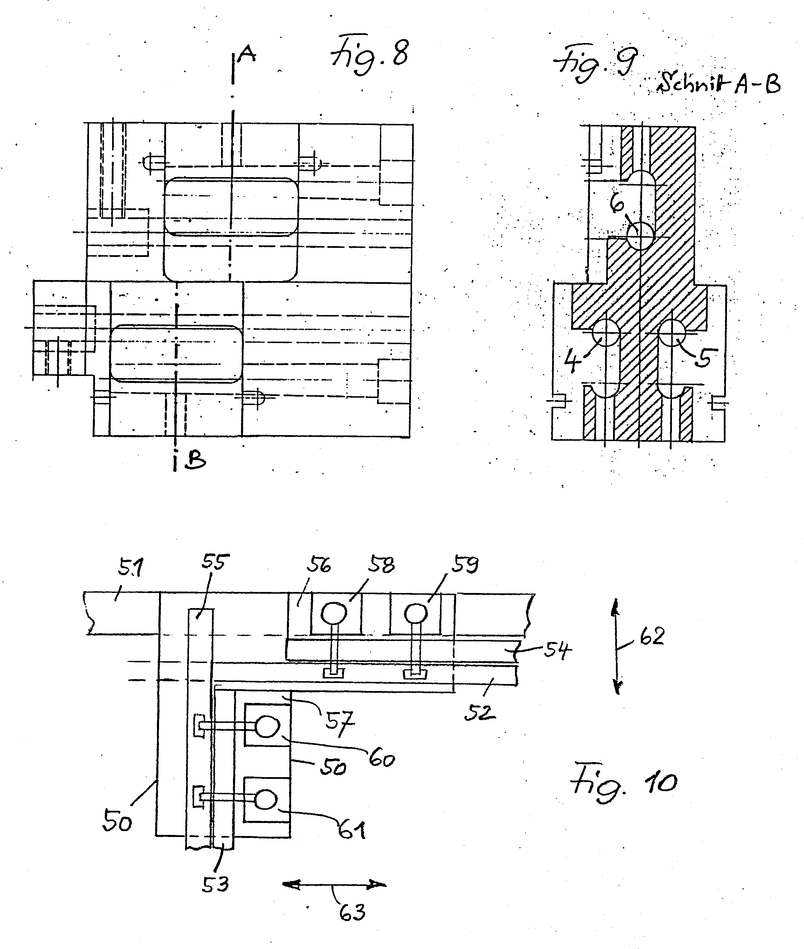

In den Figuren 5, 6 und 7 ist das Dübelaggregat 12 im Prinzip dargestellt. Das Aggregat 12 nimmt Leimeinspritzvorrichtungen 18 mit Düse 19, 20 mit Düse 21, und 22 mit Düse 23 auf, die den jeweiligen Bohrungen 6, 4, 5 so zugeordnet sind, daß sie aus ihren Düsen Leim direkt und gleichzeitig in die Bohrungen einspritzen, wenn der Befehl zur Leimabgabe über die Steuerung gegeben wird. Mit 24 ist das Aggregatgehäuse bezeichnet, das die für das Verdübeln erforderlichen Vorrichtungen aufnimmt. Aus einer nicht dargestellten Vorratsstelle, z.B. einem Dübeltrichter, werden die Dübel an den Stellen 25, 26 und 27 des Dübelaggregates 12 bereitgestellt. Aus dieser Bereitschaftsposition werden die Dübel gesteuert in die Eintreibpositionen gebracht, die identisch mit den Bohrungen 4, 5, 6 sind. Jeder einzelne Dübel wird aus der Bereitstellungsposition 25, 26, 27 in die Eintreibposition 4, 5, 6 in der Weise verschoben, daß er von einer Betätigungsstange 28, 29, 30 beaufschlagt wird, wobei die Stange 28 den Dübel nach abwärts drückt, während die Stangen 29 und 30 die jeweiligen beiden Dübel nach oben drücken. Damit die Dübel in der Eintreibposition einwandfrei positioniert sind, sind Verriegelungsvorrichtungen 31, 32 und 33 vorgesehen, die der Bewegung der Dübel von der Bereitschaftsposition in die Eintreibposition entgegenwirken und eine Vorspannung ausüben, bei einer druckgesteuerten Bewegung des Dübels in die Eintreibposition jedoch entgegen einer Federkraft auslenken und, wenn der jeweilige Dübel die Eintreibposition eingenommen hat, wieder in die Ausgangslage zurückkehren und den Dübel verriegeln. Das Eintreiben der Dübel in die Sprossen erfolgt durch Betätigungsstangen 34, 35, 36, die über einen Druckmittelkolben 37 um die erforderliche Strecke in Längsachse in die ausgerichteten Bohrungen der Sprosse eingetrieben werden. Die Betätigung bzw. Verschiebung der Stangen 34, 35, 36 für den Dübelantrieb erfolgt über einen Druckmittelkolben 37; der Arbeitshub der Stangen 34 - 36 ist einstellbar, z.B. durch Schraubverstellung 38. In Fig. 7 sind die Schläuche 39, 40, 41 mit den darin befindlichen Dübeln von einem nicht dargestellten Dübeltrichter kommend schematisch dargestellt. Die Figuren 8 und 9 zeigen eine Detaildarstellung des Dübelaggregates mit den Dübelbohrungen 4, 5, 6. Dabei stellt Fig. 9 einen Schnitt längs der Linie A-B der Fig. 8 dar.

Fig. 19 zeigt eine Ausgestaltung der Anschlagvorrichtung für das Bohren und Dübeln. Der Tisch 50 ist in Führungen auf einer Befestigungsschiene 51, die mit dem Maschinengestell verbunden ist, längsbeweglich ausgebildet. Mit 52 ist ein Anschlag dargestellt, der ein Queranschlag ist, während mit 53 ein im rechten Winkel hierzu angeordneter Längsanschlag bezeichnet ist. Jeder Anschlag 52 bzw. 53 ist mit einem Befestigungswinkel 56 bzw. 57 verbunden, auf dem die Niederhalter 58, 59 bzw. 60, 61 befestigt sind, die zur Festlegung des Werkstückes 54 bzw. 55 dienen. Mit 62 und 63 sind die Verstellrichtungen der Anschläge 52 und 53 bezeichnet. Die Verstellung der Längs- und der Queranschläge erfolgt bei gleichzeitiger Verstellung der jeweiligen Niederhalter.

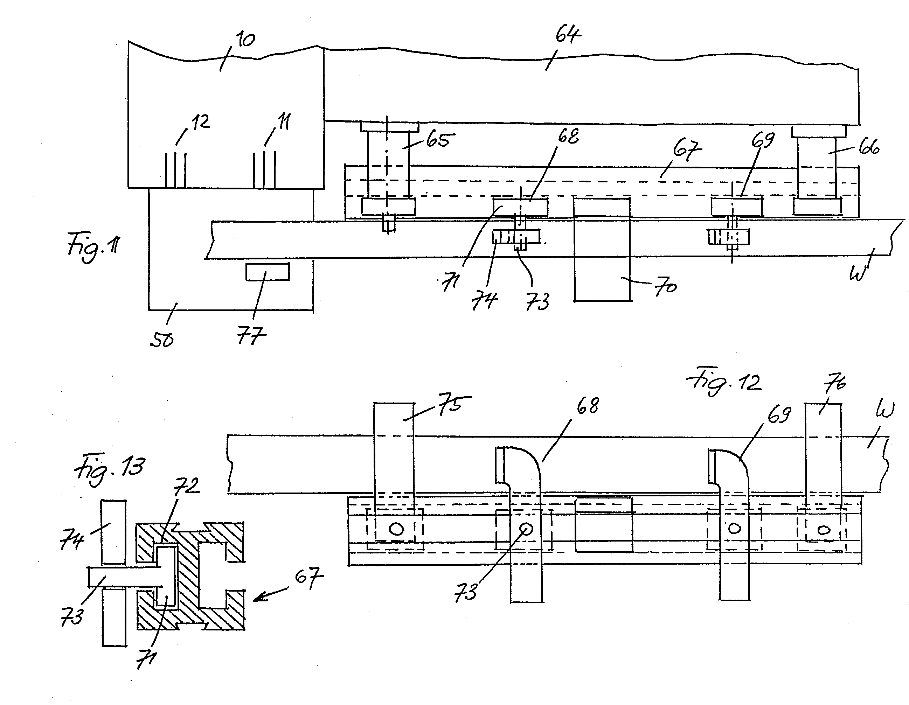

In Fig. 11 ist mit 64 das Maschinengehäuse bezeichnet, das die Dübel- und Bohrvorrichtung 10 aufnimmt und das mit dem Tisch 50 verbunden ist. Am Maschinengestell 64 ist über Halterungen 65 und 66 eine Längsanschlagschiene 67 fest oder längenverschiebbar verbunden, die vorzugsweise als Profilschiene nach Fig. 13 ausgebildet ist, welche Führungen zur Aufnahme der verstellbaren Anschläge 68, 69 besitzt. Des weiteren ist mit der Schiene 67 eine Auflage 70, vorzugsweise ebenfalls verschiebbar, befestigt, die das Werkstück W aufnimmt. Die Anschläge 68 und 69 können entweder, wie dargestellt, mechanische Anschläge sein, sie können jedoch auch an sich bekannte digitale Anschläge sein. Jeder der Anschläge besteht aus einem Führungsschuh 71, der in Führungskanälen 72 der Schiene 67 verschiebbar und festlegbar angeordnet ist, aus einem am Führungsschuh befestigten horizontalen Bolzen 73, und dem eigentlichen Anschlagelement 74, das am Bolzen 73 schwenkbar ist. Das Ausmaß der Schwenkung ist bis zur Anschlagwirkstellung begrenzt. Die Auflage 70 für das Werkstück W ist beispielsweise eine Winkelschiene, die mit der Anschlagschiene 67 fest oder verstellbar verbunden ist. Die Halterungen 65, 66, die die Verbindung zwischen Anschlagschiene 67 und Maschinengestell 64 bilden, weisen Seitenbegrenzungen 75, 76 auf, die in der Profilschiene 67 ebenfalls beweglich geführt sein können und die zur Positionierung des Werkstückes W dienen. Am Arbeitstisch 50 sind Anschläge der in Fig. 10 dargestellten Art vorgesehen. Dies ist schematisch mit 77 angedeutet. Für die Zwecke des Bohrens ohne Dübeln reicht jedoch ein einziger Anschlag 77 auf dem Tisch 50 zur Positionierung des Werkstückes W an der Bohrervorrichtung 11 aus.

Nach Fig. 13 ist ein Dübelmagazin 101 in Quaderform mit einer Breite, die der Länge der eingefüllten Dübel 102 entspricht, mit einem ein- und ausschiebbaren Boden 103 abgeschlossen. Das Magazin 101 ist im Betrieb unmittelbar über einem Dübel-Aufnahmekopf 104 angeordnet, der seitliche Führungen 105 und 106 aufweist. Der Dübel-Aufnahmekopf 104 besitzt entsprechend dem jeweiligen Bohrbild im Werkstück ausgebil dete schlitzförmige Ausnehmungen 107, 108, 109, in die die Dübel 102 aus dem Magazin aufgrund des Eigengewichtes eingeführt werden. Der z.B. jeweils unterste Dübel 110, 111, 112 (es kann dies jedoch, wie in Fig. 19 dargestellt ist, auch jeder beliebige Dübel der Gruppe von im Schlitz übereinander angeordneten Dübelanordnung sein) der schlitzförmigen Aussparungen 107, 108, 109 nimmt exakt die Position ein, in der die Dübel aus dem Dübel-Aufnahmekopf 104 ausgestoßen und in Bohrungen des Werkstückes eingesetzt werden. Der Dübel-Aufnahmekopf 104 ist in einem träger- oder leistenförmigen Schieber 113 aufgenommen, der in Pfeilrichtung relativ zum Dübelmagazin 101 hin- und herverschiebbar ist. Das Werkstück 114, z.B. ein Rahmenteil eines Fensterrahmens, liegt mit der Stirnseite an dem Schieber 113 an und weist in der Stirnseite Bohrungen 115, 116, 117 auf, die deckungsgleich mit den Dübelpositionen 110, 111, 112 sind. Das Werkstück 114 ist mit schematisch angedeuteten Feststellvorrichtungen 118, 119 zum Setzen der Dübel am Maschinengestell festgelegt.

Auf der gegenüberliegenden Seite des Schiebers 113 ist die Dübel-Ausstoßvorrichtung 120 fest und in ihrer Position einstellbar angeordnet. Sie weist Ausstoßstangen 121, 121', 121'' auf, die deckungsgleich mit dem Bohrbild 115, 116, 117 im Werkstück 114 sind. Diese Ausstoßstangen sind in der Ausstoßvorrichtung 120 geführt und in einer Platte 122 zusammengefaßt, die über eine Antriebsstange 123 mit einer Antriebsquelle verbunden ist. Die Ausstoßstangen 121 sind mit der Platte 122 über Federn 124 abgefedert gekoppelt. Ferner ist die Antriebsstange 123 mit der Dübel-Ausstoßvorrichtung 120 über eine schematisch mit 125 dargestellte Schnellkupplung verbunden, so daß das Wechseln von Dübel-Ausstoßvorrichtungen 120 zur Anpassung an das jeweilige Bohrbild schnell und einfach bewerkstelligt werden kann. Die Ausstoßvorrichtung 120 weist eine Abschlußplatte 126 auf, die eine Führung für die Ausstoßstangen 121, 121', 121'' bildet und dem Dübel-Aufnahmekopf 104 zugeordnet ist.

Der Dübel-Aufnahmekopf 104 ist den Dimensionen der Dübel 102 entsprechend ausgebildet; für unterschiedliche Dübeltypen gibt es unterschiedliche Dübel-Aufnahmeköpfe 104, die in den Führungen 105 und 106 des Schiebers 113 in den Schieber einsetzbar und aus ihm herausnehmbar sind. Wenn somit Dübel unterschiedlichen Durchmessers und/oder unterschiedlicher Länge verwendet werden sollen, wird das Dübelmagazin 101 durch den einschiebbaren Boden 103 verschlossen, die Befestigung des Magazins 101 am Maschinengestell wird gelöst und der Dübel-Aufnahmekopf 104 wird nach oben aus dem Schieber herausgenommen. Statt dieses Dübel-Aufnahmekopfes 104 wird ein anderer Dübel-Aufnahmekopf für eine andere Dübeltype eingesetzt, anschliessend wird ein anderes Dübelmagazin für die zugeordnete Dübeltype aufgeetzt, der Boden abgezogen, und damit ist die Vorrichtung für den Betrieb mit der neuen Dübeltype bereit. Ändert sich zusätzlich zu der Dübeltype das Bohrbild, ist auch eine Auswechslung der Dübel-Ausstoßvorrichtung 120 erforderlich.

In den Figuren 18 und 19 sind zwei Dübel-Aufnahmeköpfe, die unterschiedlichen Bohrbildern entsprechen, dargestellt. Bei der Ausführungsform nach Fig. 18 nimmt die schlitzförmige Aussparung 108 zwei Dübel 102, 111 auf, wobei der unterste Dübel 111 ausgestoßen wird. Das entsprechende Bohrbild ist ein einzelnes Bohloch 122. Bei der Ausführungsform nach Fig. 19 sind vier schlitzförmige Ausnehmungen 127, 128, 129, 130 vorgesehen, die mit Dübeln gefüllt sind. Von diesen Dübeln werden die mit 131, 132, 133, 134, 135 und 136 bezeichneten Dübel in entsprechende Bohrlöcher 137, 138, 139, 140, 141, 142 durch eine entsprechend ausgebildete Dübel-Ausstoßvorrichtung eingedrückt. Aus dieser Darstellung ergibt sich, daß in den übereinander angeordneten Dübeln einer jeden schlitzförmigen Ausnehmung entsprechend dem jeweiligen Bohrbild unterschiedliche, übereinanderliegende Dübel die Ausstoß-Position einnehmen, so daß also keineswegs lediglich der in der Ausnehmung unterste Dübel ausgestoßen wird. Durch die Auswechselbarkeit des Dübel-Ausnahmekopfes und der Dübel-Aus stoßvorrichtung lassen sich somit auf besonders einfache und zweckmäßige Weise die unterschiedlichsten Bohrbilder bedienen.

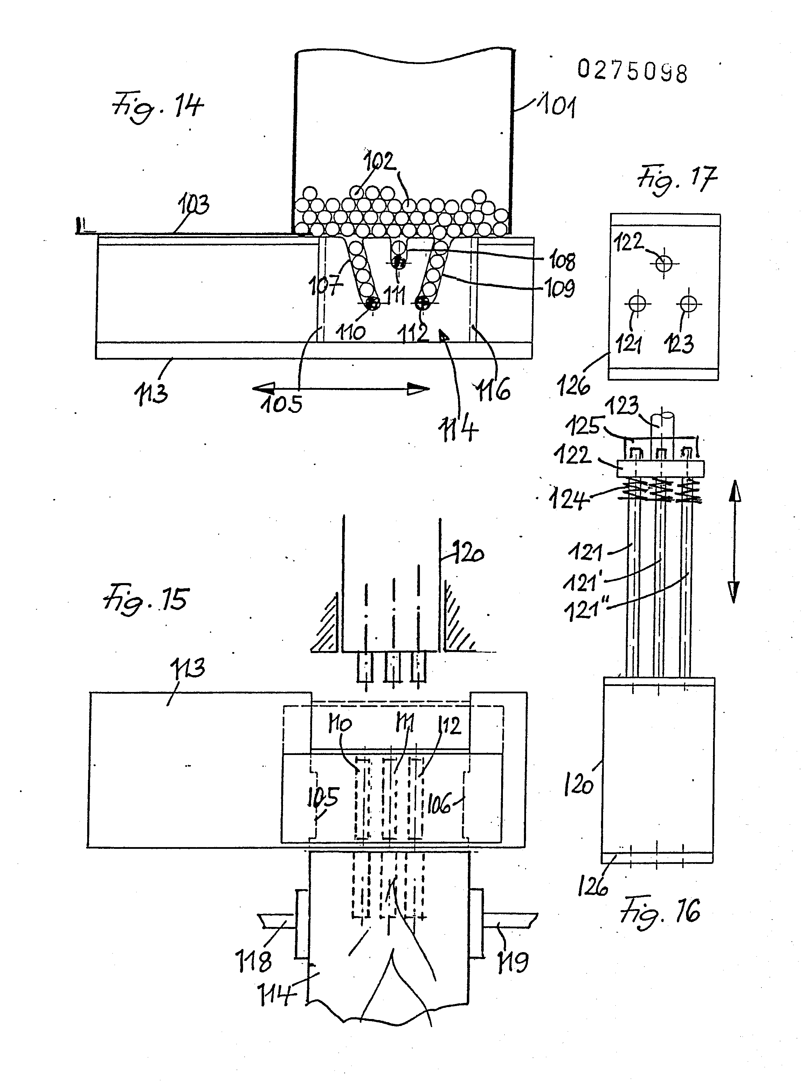

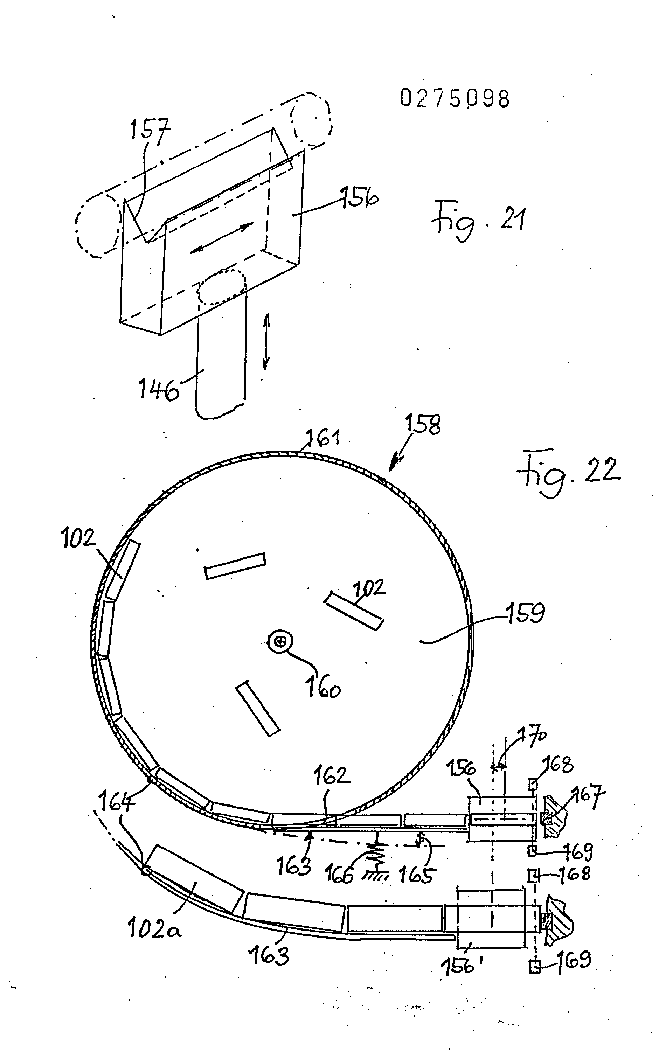

Die Dübel-Füllvorrichtung nach Fig. 20 dient dazu, Dübelmagazine mit Dübeln zu füllen, wobei die Magazine der Länge und dem Durchmesser der Dübel entsprechend ausgebildet sind. Derartige Dübelmagazine 101 werden in gefülltem Zustand auf die Vorrichtung nach Fig. 14 aufgesetzt und in leerem Zustand gegen gefüllte Magazine ausgewechselt. Zum Füllen des Dübelmagazins 101 nach Fig. 20 wird das Magazin 101 mit entferntem Boden, also nach unten offen, auf eine Arbeitsplatte 143 aufgesetzt. Anstelle eines Magazins mit entfernbarem Boden kann das Magazin bei einer anderen (nicht dargestellten) Ausführungsform der Erfindung auch so ausgelegt sein, daß der Boden trichterförmig ausgebildet ist und am Trichterauslauf ein Spalt vorgesehen ist, durch den die einzelnen Dübel zum Befüllen des Magazins ähnlich wie in der nachstehend in Verbindung mit einem Magazin mit offenem Boden beschriebenen Weise von unten gefüllt werden. Unterhalb der Arbeitsplatte 143 ist eine Dübel-Aufnahmevorrichtung 144 vorgesehen, die einen mittigen, durchgehenden Schlitzt 145 besitzt, in dem eine im Takt des Bereitstellens der Dübel auf- und abbewegte Hubstange 146 geführt ist, die den jeweils von der Aufnahmevorrichtung aufgenommenen Dübel 102 anhebt. Mit den seitlichen Begrenzungen der Aufnahmevorrichtung sind Arme 147, 148 mit am oberen Ende ausgebildeten Verengungen 149, 150 verbunden, die bei 151 und 152 so gelagert sind, daß sie nach außen, d.h. von der Aufnahmevorrichtung weg gespreizt werden, wenn der Dübel 102 aus der Aufnahmevorrichtung 144, 156 durch die Hubstange 146 nach oben gedrückt wird. Diese Spreizbewegung erfolgt entgegen der Kraftwirkung der Federn 153 und 154, die die Arme 147, 148 wieder selbsttätig in die Ausganspo sition zurückführen, sobald der Dübel 102 die Verengung 149, 150 nach oben verlassen hat und die im Spalt 155 der Arbeitsplatte 143 in Fig. 20 angedeutete Position eingenommen hat. Dieser im Spalt 155 befindliche Dübel 102 wird beim nächsten Arbeitstakt, d.h. bei dem nächsten nach oben gedrückten Dübel umittelbar in das Magazin 101 eingefüllt, wobei die bereits in dem Magazin befindlichen Dübel sich aufgrund dieser Hubbewegung und des bei jedem Hub neu eingefüllten weiteren Dübels selbsttätig parallel zueinander einstellen; die Dübel behalten während des gesamten Füllvorganges ihre achsparallele Position zueinander bei, so daß eine geordnete und einwandfreie Füllung mit parallel zueinander ausgerichteten Dübeln im Magazin 1 selbsttätig erzielt wird.

Bei einer nicht dargestellten Ausführungsform der Erfindung ist eine der Anordnung 147 - 154 entsprechende Vorrichtung unmittelbar in die Platte 143 am Spalt 155 selbst eingebaut, und zwar in Form einer den Spalt verengenden Federdruckvorrichtung, die den Spalt im Ruhezustand verengt, beim Durchdrük-

ken eines Dübels durch den Spalt jedoch den Spalt freigibt und anschließend den Spalt wieder verengt, so daß der Dübel dann nicht mehr aus dem Spalt nach unten fallen kann.

Die Dübel-Aufnahme- und -Hubvorrichtung 144, 156 ist in Fig. 21 in perspektivischer Ansicht dargestellt. Dabei ist der Aufnahmekopf 156, der mit der Hubstange 146 gekoppelt ist, in der Aufnahmevorrichtung 144 geführt und als quaderförmiges Bauteil ausgebildet, dessen Länge etwa der Länge eines Dübels 102 entspricht und dessen Breite dem Durchmesser eines Dübels 102 angepaßt ist, derart, daß die z.B. V-förmige Oberseite 157 des Bauteiles 156 einen Dübel 102 zentrisch aufnimmt. Für unterschiedliche Dübeldurchmesser und unterschiedliche Dübellängen kann ein und dasselbe Kopfbauteil 156 verwendet werden, da der Dübel in der V-förmigen Auflagefläche 157 einwandfrei zentriert ist und da Dübel-Aufnahmekopf 156 und Hubstange 146 gemeinsam in Richtung der Längsachse der Dübel-Aufnahmefläche 157 einstellbar ausgebildet sein können, um eine Anpassung an verschiedene Dübellängen zu ermöglichen. Das Dübel-Kopfbauteil 156 kann auch so ausgebildet sein, daß die in Fig. 20 die eigentliche Hubvorrichtung 156 umgebende Aufnahmevorrichtung 144 entfällt und die Arme 147, 148 mit ihren Gelenkstellen 152, 152 unmittelbar am Kopf 156 befestigt sind.

Die einzelnen Dübel 102 werden in die in Fig. 20 mit 102' bezeichnete Position, aus der sie in das Dübelmagazin angehoben werden, durch einen Dübel-Zuführförderer in die exakte Hubposition gebracht. Dieser Dübel-Zuführförderer ist beispielsweise in der in Fig. 22 dargestellten Form ausgebildet, in der ein Drehteller 158 vorgesehen ist, dessen Oberfläche 159 kegelförmig ausgebildet ist und eine Spitze 160 hat, in der eine Antriebswelle gelagert ist, die den Drehteller 158 in Rotation versetzt. Der Drehteller 158 weist eine Umfangswand 161 auf, gegen die sich die in den Drehteller in willkürlicher Anordnung eingebrachten Dübel 102 aufgrund der Zentrifugalkraft bei rotierendem Drehteller 158 unmittelbar hintereinander anschließend anlegen und damit zumindest an der Begrenzungswand 162 eine kontinuierliche Reihe von Dübeln ausbilden. Die Drehtellerwand 161 ist bei 162 geöffnet, so daß die Dübel bei rotierendem Drehteller an dieser Stelle den Drehteller verlassen. Zur Führung der aus dem Drehteller 158 austretenden Dübel 102 ist eine Leitschiene 163 vorgesehen, die eine Führungsrinne für die Dübel 102 bildet und die Reihe von Dübeln nacheinander in die Hubposition 102' der Hubvorrichtung 156 bringt. Die Leitschiene 163 schließt tangential an die Umfangswand 161 an und ist vorzugsweise bei 164 über eine Gelenkstelle mit der Umfangswand 161 verbunden, damit die Durchtrittsöffnung 162 entsprechend dem Durchmesser der bereitgestellten Dübel mehr oder weniger weit geöffnet werden kann. Der Unterschied in der Öffnungsweite ist beispielsweise durch Pfeil 165 angedeutet. Der Leitschiene 163 ist eine Verstellvorrichtung 166 zugeordnet, die die Leitschiene in ihrer eingestellten Position hält; dabei kann zur Vereinfachung eine Eichung der Öffnungsbreite für unterschiedliche Dübeldurchmesser vorgesehen sein.

Die Dübel 102 nehmen aus dem Förderer 158 kommend ihre Position in der Hubvorrichtung 156 ein; die exakte Positionierung ist mit 102' bezeichnet. In dieser Position kommt das vordere Ende des Dübels 102' in Anlage mit einer Anschlagvorrichtung 167 der Hubvorrichtung. Zu beiden Seiten der Hubvorrichtung 156 sind ferner Abtastelemente 168 und 169, die mechanischer, optischer, elektrischer oder dergl. Art sein können, vorgesehen, und die feststellen, ob das Vorderende des Dübels 102' mit dem Anschlag 167 in Anlage steht. Nur in diesem Fall ist gewährleistet, daß der Dübel 102' die für den Hubvorgang erforderliche Position eingenommen hat. Die Abtastelemente 168 und 169 signalisieren in diesem Fall, daß die Hubstange bzw. die Hubvorrichtung betätigt werden kann. Für unterschiedliche Dübellängen ist die exakte Hubposition jeweils eine andere, wie in Fig. 22 unten dargestellt, in der Dübel 102a größerer Länge schematisch angedeutet sind, deren vorderes Ende in der Positionierung für die Hubbewegung ebenfalls mit dem Anschlag 167 in Verbindung kommen, jedoch nach hinten aus der Hubvorrichtung aufgrund der größeren Länge herausragen. In diesem Falle wird die Hubvorrichtung 156 soweit in der Dübellängsachse verstellt, daß in Längsachse gesehen Mitte des Dübels 102a und Mitte der Hubfläche wieder zusammenfallen, so daß in diesem Fall gegenüber der Positionierung eines Dübels 102' eine Verstellung um einen Abstand 170 erfolgt. Diese Verstellung kann von Hand oder selbsttätig vorgenommen werden.

## Patentansprüche

1. Vorrichtung zum selbsttätigen Erstellen von Bohrungen in Sprossen und Rahmenteilen von Sprossenfenstern, zum Einbringen von Leim in die Bohrungen und zum Einführen von Dübeln in die mit Leimauftrag versehenen Bohrungen, **dadurch gekennzeichnet,** daß sie eine Einheit aus mindestens zwei, vorzugsweise drei Dübeleinführvorrichtungen (12) und mindestens zwei, vorzugsweise drei Leimauftragvorrichtungen (18 - 23) darstellt, daß jeweils eine Leimauftragvorrichtung einer Dübeleinführvorrichtung zugeordnet ist, daß alle Dübeleinführvorrichtungen für sich und alle Leimauftragvorrichtungen für sich gleichzeitig betätigbar sind, und daß die Dübeleinführvorrichtungen und die Leimauftragvorrichtungen den Bohrlöchern in einer Sprossenstirnseite des Werkstückes (1) entsprechend angeordnet sind, von denen vorzugsweise zwei Bohrlöcher (4, 5) maximal im Abstand der Sprossenstegbreite im Querteil (3) der Sprossenstirnfläche angeordnet sind, während das dritte Bohrloch (7) im Stegteil (2) ausgebildet ist.

2. Vorrichtung nach Anspruch 1, dadurch gekennzeichnet, daß die Leimauftragvorrichtungen (13; 18 - 23) im Winkel und/oder quer zur Längsachse der Vorrichtung einstellbar ausgebildet sind.

3. Vorrichtung nach Anspruch 1 oder 2, dadurch gekennzeichnet, daß die einzelnen Dübeleinführvorrichtungen (12) über getrennte Schlauchleitungen (39, 40, 41) mit einer Dübelvorratsstelle verbunden sind, daß an der Übergabestelle zur Dübeleinführvorrichtung eine Antriebsvorrichtung (34 - 37) vorgesehen ist, die den Dübel in die Dübeleinführvorrichtung bewegt, und daß jeder Dübeleinführvorrichtung eine Antriebsstange (34, 35, 36) zugeordnet ist, die den jeweiligen Dübel über einen Antriebszylinder (37) in die zugehörige Bohrung des Werkstückes einführt.

4. Vorrichtung nach Anspruch 3, dadurch gekennzeichnet, daß zwischen Übergabestelle und Dübeleinführstelle jeweils eine Verriegelungsvorrichtung (31, 32, 33) vorgesehen ist, die den jeweiligen Dübel in der Einführposition festlegt und sperrt, die vorzugsweise ein gelenkig gelagerter Hebel mit Verriegelungsnase ist, der unter Federdruck gegen den Dübel vorgespannt ist, und daß die Verriegelungsvorrichtungen einer Einheit gemeinsam betätigbar sind.

5. Vorrichtung nach Anspruch 1, dadurch gekennzeichnet, daß sie ein Bohreraggregat (11) mit mindestens zwei Bohrern (16) aufweist, die sowohl die Bohrungen (4, 5, 7) in der Stirnseite der Sprosse als in der Längsseite des Rahmenteiles im einstellbaren Abstand bohren, und daß die einzelnen Bohrer (16) eine lange Zentrierspitze (17) haben.

6. Vorrichtung nach Anspruch 1, dadurch gekennzeichnet, daß ein verschiebbarer Tisch (50) mit dem Rahmen der Vorrichtung befestigt ist, der sowohl Längs- als Queranschläge (53, 52) zum Festlegen der Sprossen und Rahmenteile für das Bohren und Dübeln aufnimmt, bzw. daß eine Längsanschlagvorrichtung (67) am Maschinengestell (64) vorgesehen ist, die mechanische Anschläge (68, 69) oder Digitalanzeigen für die Einstellung des Werkstückes (W) aufweist und daß ein verschiebbarer Tisch (50) mit Queranschlag selbsttätig einstellbar um den Abstand zwischen Bohreraggregat und Dübelaggregat verschiebbar ist.

7. Verfahren zum Bereitstellen von Dübeln (2) oder dergl. zylindrischen Verbindungselementen in Magazinen (1) und zum gesteuerten Einsetzen dieser Dübel in Bohrungen eines Bauteiles, das mit einem Gegenbauteil verbunden werden soll, dadurch gekennzeichnet, daß die Dübel (2) in Magazine (1) eingefüllt und die gefüllten Magazine bereitgestellt werden, daß ein gefülltes Magazin in die Dübelbereitstellvorrichtung so eingesetzt wird, daß der Magazinboden (3) über einem Dübelaufnahmekopf (4) angeordnet und die Dübelabgabestelle den Aufnahmestellen des Dübelaufnahmekopfes (4) zugeordnet wird, daß Dübel in Aussparungen des Dübelaufnahmekopfes übergeführt und in die Abgabeposition gebracht werden, und daß die Dübel in der Abgabeposition mit Hilfe einer Dübelausstoßvorrichtung (20 - 26) aus dem Dübelaufnahmekopf (4) in die deckungsgleichen, zugeordneten Bohrungen im Bauteil eingesetzt werden.

8. Verfahren nach Anspruch 7, dadurch gekennzeichnet, daß die Dübel (2) gesteuert und einzeln nacheinander in die jeweiligen Aufnahmestellen des Dübelaufnahmekopfes (4) übergeführt werden, daß der Dübelaufnahmekopf (4) mit seinen Dübelaufnahmestellen relativ zum zumindest teilweise geöffneten Boden (3) des aufgesetzten Dübelmagazins bewegt wird, um eine Dübelabgabe aus dem Magazin in den Dübelaufnahmekopf (4) zu erreichen, daß für den Einsatz von Dübeln (2) unterschiedlicher Abmessungen (Länge, Durchmesser) unterschiedliche Magazine (1) und unterschiedliche Aufnahmeköpfe (4) verwendet werden, und daß für unterschiedliche Bohrbilder unterschiedliche Dübelaufnahmeköpfe (4) und unterschiedliche, angepaßte Ausstoßvorrichtungen (20 -26) eingesetzt werden.

9. Verfahren zum Füllen von Magazinen (1) mit Dübeln (2) oder dergl. zylindrischen Verbindungselementen, wie sie zur Durchführung des Verfahrens nach Anspruch 7 oder 8 verwendet werden, dadurch gekennzeichnet, daß die einzelnen Dübel (2) nacheinander über einen Dübel-Zuführförderer (58 - 62) unterhalb des Dübelmagazins (1) an einer Übergabestelle positioniert werden, über der ein Schlitz (55) im Magazinboden (13) bzw. bei entferntem Magazinboden in einer das Magazin aufnehmenden Arbeitsplatte (43) ausgebildet ist, daß die im Magazin (1) zu speichernden Dübel (2) unterhalb des Schlitzes (55) einzeln nacheinander und taktweise positioniert von unten nach oben durch den Schlitz (55) hindurch angehoben werden, daß der jeweils bis zum Schlitz angehobene Dübel an einer Abwärtsbewegung gehindert wird, und daß das Füllen des Magazins durch laufendes Einführen von Dübeln durch den Schlitz hindurch von unten her erfolgt.

10. Vorrichtung zum Bereitstellen von Dübeln (2) oder dergl. zylindrischen Verbindungselementen in Magazinen (1) und zum gesteuerten Einsetzen von Dübeln in Bohrungen eines Bauteiles, das mit einem Gegenbauteil verbunden werden soll, zur Durchführung des Verfahrens nach einem der Ansprüche 7 - 9, gekennzeichnet durch

a) ein mit parallel zueinander angeordneten Dübeln (2) gefülltes Dübelmagazin (1), das auf der Vorrichtung lösbar mit Hilfe einer Wechselvorrichtung befestigt ist,

b) einen unterhalb des Dübelmagazins (1) auswechselbar angeordneten Dübelaufnahmekopf (4), dessen Dübelaufnahmeöffnungen (7, 8, 9) in Ausstoßrichtung deckungsgleich mit den Bohrungen (15, 16, 17) des Bauteiles (14), in die die Dübel (2) eingesetzt werden, angeordnet sind, und

c) eine Dübelausstoßvorrichtung (20 - 26), deren Ausstoßelemente (21, 22, 23) mit den Dübelaufnahmeöffnungen (7, 8, 9) entsprechend positioniert sind und die in Achsrichtung der Dübel betätigbar sind.

11. Vorrichtung nach Anspruch 10, dadurch gekennzeichnet, daß der Boden (3) des Magazins (1) abnehmbar, z.B. herausziehbar ausgebildet ist, derart, daß in Betriebsposition des Magazins (1) und bei entferntem Boden (3) die Dübel (2) umittelbar auf der Dübelaufnahmevorrichtung (4) aufliegen und in deren Dübelaufnahmeöffnungen (7, 8, 9) gleiten, und daß der Dübelaufnahmekopf (4) in einem relativ zum Dübelmagazin (1) in einer Richtung quer zur Längsachse der Dübel (2) im Dübelmagazin (1) im Takt hin-und herbewegbaren Schieber (13) angeordnet ist.

12. Vorrichtung nach Anspruch 10 und 11, dadurch gekennzeichnet, daß die Dübelaufnahmevorrichtung (4) ein Materialblock ist, der in vertikalen Führungen (5, 6) des Schiebers (13) in eine Ausnehmung des Schiebers einschiebbar und im Schieber positionierbar ist, daß der Dübelaufnahmekopf (4) von einer Seitenwand zur anderen durchgehende, auf der Oberseite zur Aufnahme der Dübel (2) offene Schlitze (7, 8, 9) aufweist, die so ausgebildet sind, daß in bestimmten Positionen ein Dübel (10, 11, 12) eines jeden Schlitzes in Ausstoßposition angeordnet ist, und deren Breite so bemessen ist, daß die Dübel darin frei nach unten beweglich sind, und daß die Position des jeweils auszustoßenden Dübels im Schlitz so ausgelegt ist, daß die auszustoßenden Dübel in ihrer Position miteinander mit den Bohrbild deckungsgleich sind.

13. Vorrichtung zum Füllen eines Magazins für eine Vorrichtung nach Anspruch 10 oder 11, zur Aufnahme von Dübeln (2) oder dergl. zylindrischen Verbindungselementen mit Hilfe einer selbsttätig arbeitenden Dübelzuführfördervorrichtung, dadurch gekennzeichnet, daß der Magazinboden (13) bzw. bei entferntem Magazinboden die Arbeitsplatte (43), auf die das unten offene Magazin (1) aufgesetzt ist, einen Schlitz (55) aufweist, dessen Breite größer ist als der Dübeldurchmesser und dessen Länge größer ist als die Dübellänge, daß unterhalb des Schlitzes (55) eine taktgesteuerte Dübel-Hubvorrichtung (45 - 50) vorgesehen ist, die die von dem Dübel-Zuführförderer (58 - 62) an der Übergabestelle unterhalb des Schlitzes (55) einzeln bereitgestellten Dübel (2) im Takt durch den Schlitz hindurch in das Magazin (1) drückt, und daß eine Klemm-bzw. Druckvorrichtung (49 - 54) vorgesehen ist, die unterhalb des Schlitzes (55) einen verengten Spalt ausbildet, der beim Durchtritt des positionierten Dübels (2') und bei dessen Bewegung in den Schlitz (55) hinein sich erweitert und, sobald der Dübel den Spalt nach oben verlassen hat, sich wieder verengt, so daß der Dübel (2″) an einer Abwärtsbewegung gehindert ist.

14. Vorrichtung nach Anspruch 13, dadurch gekennzeichnet, daß die Dübel-Hubvorrichtung (45 - 50) einen den positionierten Dübel (2') aufnehmenden Hubkolben (56) mit Zentrierfläche (57) aufweist, daß der Hubkolben (56) eine Längserstreckung parallel zur Längsachse des Dübels (2, 2', 2″) sowie eine Länge etwa gleich der Länge eines Dübels (2) hat, daß der Hubkolben in Längsachse der Dübel (2) verschiebbar und mittig auf Dübel unterschiedlicher Länge einstellbar ausgebildet ist, daß die Dübel-Zuführvorrichtung (58 - 64) als angetriebener Drehteller (58) ausgebildet ist, der an seiner Umfangswand (61) einen tangentialen Auslaß (62) für die an der Umfangswand (61) hintereinander und aneinander anschließenden Dübel (2) besitzt, und daß ein auf unterschiedliche Dübeldurchmesser einstellbares Leitblech (63) vorgesehen ist, das die Dübel vom Einlaß (62) zur Dübelübergabestelle leitet, wobei eine Anschlagvorrichtung (67) vorgesehen ist, an der die Stirnseite des Dübels (2) in der Hubposition in Eingriff kommt, und wobei der Hubvorrichtung (56) eine Abtastvorrichtung (68, 69) zugeordnet ist, die das vordere Ende des positionierten Dübels (2') feststellt und bei vorhandenem Dübel ein Signal an die Hubsteurerung zum Anheben des Hubkolbens (56) mit Dübel gibt.

0275098

Fig.1

Fig.2

Fig.3

Fig.4

Fig.7

Fig. 5

Fig. 6

0275098

0275098

Fig. 8

A

B

Fig. 9  Schnit A-B

6

4  5

51  55  56  58  59

54

62

57

52

50  60

50

61

50

53

63

Fig. 10

Fig. 1

10
64
12  11
65  68  67  69  66
71  74  73  70  W
50  77

Fig. 12
75  68  69  76  W
73

Fig. 13
72
74
73  71  67

0275098

Fig. 14

Fig. 17

Fig. 15

Fig. 16

0275098

Fig. 18

Fig. 19

Fig. 20

0275098

Fig. 21

Fig. 22